# EUROPÄISCHE PATENTSCHRIFT

(11) **EP 0 443 473 B1**
(45) Veröffentlichungstag und Bekanntmachung des Hinweises auf die Patenterteilung: **12.10.1994**
(21) Anmeldenummer: 91102227.5
(22) Anmeldetag: 16.02.1991
(51) Int. Cl.: F16J 15/40, F16J 15/54, F16J 15/16

(54) **Sperrflüssigkeits-Dichtungsanordnung bei einem Turboverdichter**
Confining liquid-sealing arrangement for a turbo compressor
Disposition d'étanchéité avec liquide d'arrêt pour turbo compresseur

(30) Priorität: 21.02.1990 DE 4005428
(43) Veröffentlichungstag der Anmeldung: 28.08.1991
(73) Patentinhaber: MANNESMANN Aktiengesellschaft, 40027 Düsseldorf (DE); Pacific Wietz GmbH + Co. KG, 44388 Dortmund (DE)
(72) Erfinder: Schellong, Helmut, W-4100 Duisburg 46 (DE); Victor, Karl-Heinz, W-4620 Castrop-Rauxel (DE); Laarmann, Hans-Wilhelm, W-4700 Hamm 3 (DE); Maser, Gustav, W-4600 Dortmund 50 (DE); Dedeken, Ralf, Dr., W-5810 Witten-Heven (DE)
(74) Vertreter: Andrejewski, Walter

(56) Entgegenhaltungen:
- GB-A- 1 360 117
- US-A- 4 071 253
- US-A- 4 087 097
- US-A- 4 109 920

## Beschreibung

Die Erfindung betrifft eine Sperrflüssigkeits-Dichtungsanordnung für die Wellenabdichtung bei einem Turboverdichter, insbesondere bei einem Hochdruck-Turboverdichter mit den Merkmalen des Oberbegriffs des Patentanspruches 1.

Die aus der Praxis bekannte Sperrflüssigkeits-Dichtungsanordnung, von der die Erfindung ausgeht, arbeitet mit Schwimmringdichtungen. Schwimmringdichtungen sind Radialspaltdichtungen mit Spiel zwischen der rotierenden Welle und den mit dem Dichtungsgehäuse verbundenen, stehenden aber radialbeweglichen Dichtringen. Dem Zwecke einer Sperrflüssigkeits-Dichtungsanordnung entsprechend ist der Druck der Sperrflüssigkeit etwas größer als der abzudichtende Gasdruck. Die Druckdifferenz ist im Rahmen der bekannten Maßnahmen klein, sie liegt beispielsweise bei 0,5 bar. Sie ist klein, um die Innenleckagemenge an dem gasseitigen Dichtungsring klein zu halten. Der Radialspalt an dem äußeren Dichtungsring ist so bemessen, daß sich der zur Kühlung des gasseitigen Dichtungsringes nötige Sperrflüssigkeitsstrom als Kühlmittelstrom einstellt. Dieser Kühlmittelstrom ist etwa proportional dem Abdichtdruck. Das bedeutet, daß eine optimale Kühlung nur für einen bestimmten Druckbereich gegeben ist und daß sich für Turboverdichter, die in einem großen Druckbereich arbeiten müssen, Einschränkungen ergeben können. Hinzu kommt, daß bei höheren Drucken die Regelung des Differenzdruckes zwischen der Sperrflüssigkeit einerseits und dem abzudichtenden Gas andererseits schwierig ist, weil der Differenzdruck im Vergleich zu dem abzudichtenden Gasdruck sehr klein wird. Die Regelung erfolgt durch eine Vordrucksteuerung und eine indirekte Differenzdruckregelung durch Regelung des Flüssigkeitsniveaus für die Sperrflüssigkeit in einem Hochbehälter. Der erzeugte Differenzdruck ist proportional der geodätischen Höhe der Sperrflüssigkeitsmenge im Hochbehälter relativ zur Welle des Turboverdichters. Die Sperrflüssigkeit wird durch Hochdruckpumpen auf Druck gebracht und im Radialspalt der äußeren Schwimmringe auf Atmosphärendruck entspannt. Die im Hochbehälter gespeicherte Sperrflüssigkeitsmenge muß so groß sein, daß bei Ausfall der Sperrflüssigkeitsversorgnung ein geregeltes Abfahren der Turboverdichteranlage möglich ist. Bei Stillstand der Anlage unter Druck muß die Sperrflüssigkeitsanlage in Betrieb gehalten werden. Das Sperrflüssigkeitssystem ist insoweit ein offenes System. Im übrigen sind die beschriebenen Maßnahmen aufwendig. Eine ähnliche Anordnung ist aus der GB-A 13 60 117 bekannt.

Demgegenüber liegt der Erfindung die Aufgabe zugrunde, eine Sperrflüssigkeits-Dichtungsanordnung zu schaffen, die sehr viel einfacher aufgebaut ist, mit geringen Leckagemengen arbeitet und auch die Voraussetzung für eine einfache Differenzdruckregelung, insbesondere bei hohen Drucken und entsprechender Verlustleistung schafft.

Diese Aufgabe wird gelöst mit der Sperrflüssigkeits-Dichtungsanordnung nach Patentanspruch 1.

Bei dem Dichtsystem, welches dem gasseitigen Gleitring zugeordnet ist, handelt es sich vorzugsweise um einen Faltenbalg. Man kann hier aber auch mit anderen Dichtsystemen arbeiten, z.B. mit O-Ring und Federelementen.

Durch die Kombination der vorstehenden Merkmale wird ein fremddruckunabhängiges, flüssigkeitsgesperrtes Doppeldichtungssystem für Turboverdichter und insbesondere Hochdruck-Turboverdichter erreicht. Dabei kommt es auch auf die Abstimmungen der Flächen und Werkstoffe an. Dadurch, daß das Flächenverhältnis K im Bereich von 0,45 bis 0,60 liegt, werden die auf den Axialspalt einwirkenden äußeren Kräfte, Zuzüglich der Federkräfte, bestimmt, die sich mit dem hydrodynamischen, im Dichtfilm der Sperrflüssigkeit erzeugten Kräften, im Gleitgewichtszustand befinden. Die Spaltdicke des Arbeitsspaltes bestimmt das Leckageverhalten. Es kann auch bei hohen Differenzdrücken von z. B. 300 bar und mehr so eingerichtet werden, daß die Leckflüssigkeitsmenge gegen null geht, wenn die Drehzahl gegen null geht oder Stillstand eintritt. Die Einstellung kann fernerhin so getroffen werden, daß bei Drehzahlen, die z. B. 100 m/sek Umfangsgeschwindigkeit, unter gleichen Druckbedingungen, entsprechen, die Leckmenge eines üblichen Sperröls 50 1/Std. nicht überschreitet. Die Temperaturen in diesem Dichtspalt bleiben bei diesen Bedingungen niedriger als 130 °C, so daß das Sperröl eine störende Temperatureinwirkung nicht erfährt. Die Erfindung beruht fernerhin auf der Erkenntnis, daß das angegebene Flächenverhältnis von K im Bereich von 0,45 bis 0,60 insbesondere dann genügend genau für den Hochdruckeinsatz eingehalten werden kann, wenn als Werkstoffe für die Gleitringe und für den Rotorring, wie angegeben, solche mit hohem E-Modul eingesetzt werden. Anderenfalls könnten die Druchmesser der Dichtflächen gegenüber dem sogenannten Wirkdurchmesser des Gehäuses unter Außendruckwirkung einfedern und den Funktionsspalt unzulässig verengen. Der Funktionsspalt wird zumeist auf eine Spaltdicke von 0,15 mm ausgelegt. Um die angegebene Temperatur von maximal 130 °C zu halten, sind auch die weiteren zur Lehre der Erfindung gehörenden Merkmale von Bedeutung, die die Wärmeleitfähigkeit und die Ausbildung der Wärmeaustauschoberfläche betreffen. Damit unter allen Betriebsverhältnissen und bei den angegebenen hohen Drücken die Funktionstüchtigkeit der Sperrflüssigkeits-Dichtungsanordnung erhalten bleibt, sind in der beschriebenen Weise die Abdichtung des Funktionsspaltes und die Zentrierung des atmosphärenseitigen Dichtringes voneinander getrennt.

Nach bevorzugter Ausführungsform der Erfindung besitzen die Gleitringe und der Rotorring eine Wärmeleitfähigkeit von gleich oder größer 70 W/mk. Um eine ausreichende Kühlung durch die Sperrflüssigkeit zu erreichen, weisen, zumindest der Rotorring und gegebenenfalls die Gleitringe zum Rotorring hin außenseitig eine vergrößerte Wärmeaustauschoberfläche auf. Aus gleichem Grunde ist die freie äußere Oberfläche des Rotorringes sowie der Gleitringe, die der Sperrflüssigkeit zugewandt sind, um etwa einen Faktor 15 größer als die Dichtfläche am atmosphärenseitigen Gleitring.

Bei der erfindungsgemäßen Sperrflüssigkeits-Dichtungsanordnung ist die gasseitige Dichtung eine Gleitringdichtung mit niedrigen Leckagewerten, die vorzugsweise im Mischreibungsgebiet arbeitet. Die atmosphärenseitige Dichtung ist eine Axialspaltdichtung, deren Dichtflächen im dynamischen Zustand durch einen hydrodynamisch ausgebildeten Flüssigkeitsfilm getrennt sind. Mischreibung liegt vor, wenn sich im Dichtspalt zwar ein tragender Schmierfilm befindet, dieser jedoch stellenweise unterbrochen ist. Neben den Eigenschaften des Schmierstoffes beginnen auch die Gleiteigenschaften der Gleitwerkstoffpaarung das Reibverhalten bzw. die Reibungszahl zu beeinflussen. Bei der Flüssigkeitsreibung mit einem hydrodynamisch ausgebildeten Flüssigkeitsfilm wird die Reibzahl allein durch die dynamische Zähigkeit des Schmierstoffes bestimmt. Die nach außen abfließende Leckagemenge kann zur Funktionskontrolle des Gesamtsystems herangezogen werden. Sie ist dabei stets so klein einrichtbar, daß die weiteren im System befindlichen Regeleinrichtungen niemals ihre betriebssichernden Regelbereiche überschreiten. Der Sperrflüssigkeitskreis ist geschlossen. Das bedeutet, daß die Sperrflüssigkeit bei der erfindungsgemäßen Sperrflüssigkeits-Dichtungsanordnung auf dem Abdichtdruckniveau bleibt. Sie wird durch eine Kreislaufpumpe, welche die Strömungswiderstände des geschlossenen Kreislaufs überwinden muß, umgepumpt. Die Verlustleistung der Dichtungen wird an den Kühler abgeführt. Die aus den geschlossenen Sperrflüssigkeitskreis über die Axialspalte der Gleitringe austretende sehr kleine einstellbare Leckmenge wird intermittierend über eine kleine Speisepumpe ersetzt.

Die erreichten Vorteile sind hauptsächlich darin zu sehen, daß bei der erfindungsgemäßen Sperrflüssigkeits-Dichtungsanordnung die Leckagemenge sehr viel kleiner ist als bei der eingangs beschriebenen Ausführungsform mit Schwimmringdichtungen. Daher ist ohne Schwierigkeiten der Betrieb mit einem geschlossenen Sperrflüssigkeitskreis möglich und kann auf einfache Weise auch die Differenzdruckregelung durchgeführt werden. Das System insgesamt ist einfach, weil Hochbehälter und Sperrflüssigkeitspumpen hoher Leistung sowie die dazu üblichen Differenzdruckregelventile nicht mehr erforderlich sind. Im Ergebnis erreicht man auch eine beachtliche Energieersparnis. Die Kühlung der Dichtung ist unabhängig vom Druckniveau. Von besonderem Vorteil sind fernerhin die kleinen Innenleckagemengen und die Stillstandsdichtheit. Die Gleitringe und der Rotorring lassen sich ohne weiteres aus Werkstoffen hoher Standzeit aufbauen. Arbeitet man mit den beschriebenen Werkstoffen bzw. Werkstoffkombinationen, so sind die Gleitringe sowie der Rotorring praktisch verschleißfrei.

Im folgenden wird die Erfindung anhand einer lediglich ein Ausführungsbeispiel darstellenden Zeichnung ausführlicher erläutert. Es zeigen
- Fig. 1: eine schematische Darstellung eines Turboverdichters mit erfindungsgemäßer Sperrflüssigkeits-Dichtungsanordnung,
- Fig. 2: in gegenüber der Fig. 1 wesentlich vergrößertem Maßstab einen Axialschnitt durch die linke der Sperrflüssigkeits-Dichtungsanordnung des Turboverdichters in Fig. 1,
- Fig. 3: in nochmals vergrößertem Maßstab die Dichtungsanordnung nach Fig. 2 in weiterer Detailierung in bezug auf die konstruktive Gestaltung.

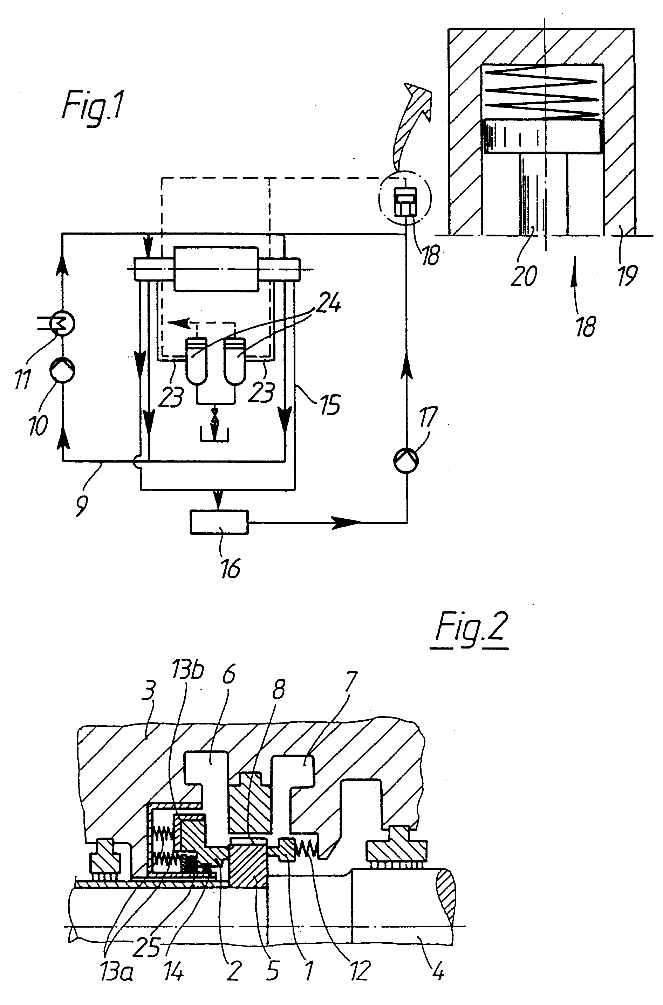

Zu der Sperrflüssigkeits-Dichtungsanordnung, die in den Figuren dargestellt ist, gehören zunächst ein gasseitiger axial dichtender Gleitring 1 und ein atmosphärenseitiger axial dichtender Gleitring 2, die beide fest im Dichtungsgehäuse 3 angeordnet sind. Es gehört dazu fernerhin ein mit der Welle 4 verbundener Rotorring 5 mit einander, gegenüberliegenden Dichtflächen, denen die Gleitringe 1, 2 mit ihren Dichtflächen zugeordnet sind. Beiden Gleitringen 1, 2 ist ein Sperrflüssigkeitsraum 6 bzw. 7 zugeordnet. Die beiden Sperrflüssigkeitsräume 6, 7 stehen an der Umfangsseite des Rotorringes 5 über den Ringkanal 8 miteinander in Verbindung. Der atmosphärenseitige Gleitring 2 dichtet den zugeordneten Sperrflüssigkeitsraum 6 gegen die Atmosphäre ab. Der gasseitige Gleitring 1 dichtet den zugeordneten Sperrflüssigkeitsraum 7 gegen den Gasraum ab. Die beiden Sperrflüssigkeitsräume 6, 7 gehören einem geschlossenen Sperrflüssigkeitskreis 9 mit Pumpe 10 und Kühler 11 an. Die im Schema mit dem Bezugszeichen 10 versehene Pumpe könnte auch mit dem Rotorring 5 als Pumpenrotor arbeiten und wäre dann in die Dichtungsanordnung integriert. Aus der Fig. 2 entnimmt man, daß der gasseitige Gleitring 1 von einem die Welle 4 umgebenden Faltenbalg 12 gehalten ist. Der atmosphärenseitige Gleitring 2 ist durch Sekundärelemente in Form von Federn 13 und O-Ringen 14 axial- und radialbeweglich gehalten. Die Innenleckagemengen der Sperrflüssigkeit sind über eine Leitung 23 zu einem Abscheider 24 geführt. Nach eventueller Aufbereitung wird diese Leckmenge dem Tank 16 zugeführt. Die Außenleckagen der Sperrflüssigkeit sind über eine Leitung 15 zu dem Tank 16 geführt. Die Sperrflüssigkeitsmenge im Sperrflüssigkeitskreis wird über eine Speisepumpe 17 und einen Druckübersetzer 18 wieder aufgefüllt. Der Druckübersetzer 18 ist einerseits von dem abzudichtenden Gas und von einer nicht gezeichneten einstellbaren Feder beaufschlagt, andererseits von der Sperrflüssigkeit im Sperrflüssigkeitskreis. Über die Einstellung der Feder können der Druck im Sperrflüssigkeitskreis und damit die Druckdifferenz zwischen Sperrflüssigkeit und abzudichtendem Gas bestimmt werden. Der Druckübersetzer 18 ist gleichzeitig als Sperrflüssigkeitsspeicher ausgebildet. Die Druckdifferenz zwischen dem abzudichtenden Gas und der Sperrflüssigkeit wird in dem Druckübersetzer 18 erzeugt. Der Druckübersetzer 18 besteht im einzelnen aus einem Druckzylinder 19, in dem ein Kolben 20 axialbeweglich angeordnet ist. Die eine Seite des Kolbens 20 wird mit der Sperrflüssigkeit und die andere Seite wird mit dem abzudichtenden Gas beaufschlagt. Auf der Gasseite greift zusätzlich zum Gasdruck noch eine Federkraft an. Diese erzeugt eine Druckdifferenz zwischen Sperrflüssigkeit und Gas. Der Differenzdruck wird in einem vorgegebenen Bereich gehalten und ist unabhängig vom Druckniveau. Da der Druckübersetzer 18 gleichzeitig Sperrflüssigkeitsspeicher ist, sind auch bei Ausfall der Energieversorgung der Speisepumpen ein geregeltes Abfahren des Turboverdichters und ein längerer Stillstand unter Druck möglich.

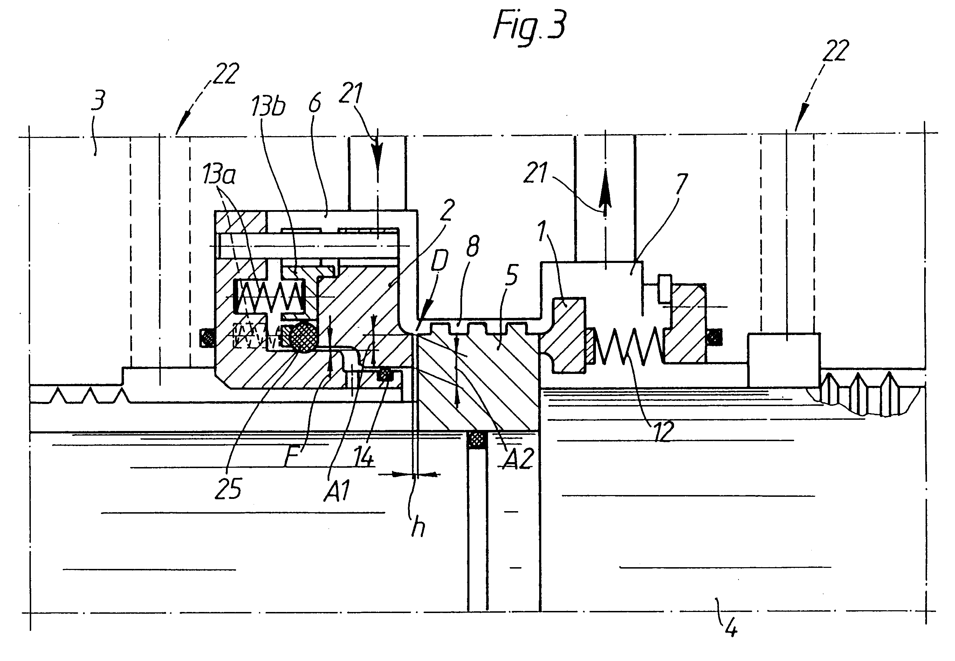

Die Dichtungsanordnung, die in der Fig. 3 dargestellt worden ist, ist mit den Bezugszeichen versehen worden, die schon im Zusammenhang mit den Fig. 1 und 2 erläutert worden sind. Zusätzlich eingetragen wurden der Funktionsspalt F, der Dichtungsspalt D und die Flächen A1 und A2. Der Dichtungsspalt D hat die Spaltdicke h. Für die in Fig. 3 erkennbaren Bauteile gelten die Abstimmungsregeln und die zahlenmäßigen Parameter, die vorstehend erläutert und Gegenstand der Patentansprüche sind. Die Zuführung der Sperrflüssigkeit und die Abführung der Sperrflüssigkeit ist durch Pfeile 21 angedeutet worden. Die Leckageflüssigkeit kann bei 22 abgeführt werden.

## Patentansprüche

1. Sperrflüssigkeits-Dichtungsanordnung für die Wellenabdichtung bei einem Turboverdichter, insbesondere bei einem Hochdruck-Turboverdichter, - mit einem gasseitigen axial dichtenden, federbelasteten Gleitring (1), einem atmosphärenseitigen axial, federbelasteten dichtenden Gleitring (2), die beide im Gehäuse (3) fest angeordnet sind, und einem mit der Welle (4) verbundenen Rotorring (5) mit einander gegenüberliegenden Dichtflächen_{,} denen die Gleitringe (1, 2) mit ihren Dichtflächen zugeordnet sind, wobei beiden Gleitringen (1, 2) ein Sperrflüssigkeitsraum (6 bzw. 7) zugeordnet ist, welche Sperrflüssigkeitsräume (6, 7) an der Umfangsseite des Rotorringes (5) über einen Ringkanal (8) miteinander in Verbindung stehen, wobei der atmosphärenseitige Gleitring (2) den zugeordneten Sperrflüssigkeitsraum (6) gegen die Atmosphäre abdichtet sowie der gasseitige Gleitring (1) den zugeordneten Sperrflüssigkeitsraum (7) gegen den Gasraum abdichtet, **dadurch gekennzeichnet**, daß die beiden Sperrflüssigkeitsräume (6, 7) einem geschlossenen Sperrflüssigkeitskreis (9) mit Pumpe (10) und Kühler (11) angehören, daß der gasseitige Gleitring (1) von einem die Welle (4) umgebenden Dichtsystem (12) sowie der atmosphärenseitige Gleitring (2) durch Sekundärelemente in Form eines durch Federn (13a) abgestützten Ringes (13b) bzw. in Form eines O-Ringes (14) mit Funktionsspalt (F) gegenüber dem Gehäuse (3) axial- und radialbeweglich gehalten ist,
daß die atmosphärenseitige Gleitringdichtung (2) ein Flächenverhältnis K im Bereich von 0,45 bis 0,60 aufweist, wobei K den Quotienten aus der von dem Druck der Sperrflüssigkeit aktivierten Fläche (A1) als Zähler und der Dichtfläche (A2) als Nenner angibt,
daß die Gleitringe (1, 2) und der Rotorring (5) aus einem Werkstoff mit einem Elastizitätsmodul von gleich oder größer als 250 000 N/mm² bestehen, sowie eine Wärmeleitfähigkeit von gleich oder größer 70 W/mk aufweisen,
wobei der Funktionsspalt (F), den der atmosphärenseitige Gleitring (2) gegenüber dem zugeordneten Gehäuseteil (3) bildet, von einem vorgelegten O-Ring (25) zentrierwirkungsfrei abgedichtet ist und
wobei außerdem für die Zentrierung der O-Ring (14) zwischen dem Gehäuse (3) und Gleitring (2) innendurchmesserseitig angeordnet ist.

2. Sperrflüssigkeits-Dichtungsanordnung nach Anspruch 1, dadurch gekennzeichnet, daß zumindest der Rotorring (5) und gegebenenfalls die Gleitringe (1, 2) zum Rotorring (5) hin außenseitig eine vergrößerte Wärmeaustauschoberfläche aufweisen.

3. Sperrflüssigkeits-Dichtungsanordnung nach Anspruch 2, dadurch gekennzeichnet, daß die freie äußere Oberfläche des Rotorringes (5) sowie der Gleitringe (1, 2) um etwa einen Faktor 15 größer sind als die Dichtfläche (A2) am atmosphärenseitigen Gleitring (2).

## Claims

1. A sealing liquid seal arrangement for the shaft seal in a turbocompressor, particularly in a high-pressure turbocompressor, with a spring-loaded sliding ring (1) providing an axial seal on the gas side, a spring-loaded sliding ring (2) providing an axial seal on the atmosphere side, which are both disposed fixed in the housing (3), and a rotor ring (5) attached to the shaft (4) and having opposite seal faces with which the seal faces of the sliding rings (1, 2) are associated, wherein a sealing liquid space (6; 7) is associated with both sliding rings (1, 2), which sealing liquid spaces (6, 7) are connected to each other at the peripheral face of the rotor ring (5) via an annular channel (8), wherein the sliding ring (2) on the atmosphere side seals the associated sealing liquid space (6) from the atmosphere and the sliding ring (1) on the gas side seals the associated sealing liquid space (7) from the gas space, characterised in that the two sealing liquid spaces (6, 7) form part of a closed sealing liquid circuit (9) with a pump (10) and a cooling device (11), that the sliding ring (1) on the gas side is held by a sealing system (12) surrounding the shaft (4) and the sliding ring (2) on the atmosphere side is held so that it is axially and radially movable with an operating gap (F) in relation to the housing (3) by secondary elements in the form of a ring (13b) supported by springs (13a) or in the form of an O-ring (14),
that the sliding ring seal (2) on the atmosphere side has an area ratio K in the range from 0.45 to 0.60, wherein K represents the fraction having the face area (A1) activated by the pressure of the sealing liquid as the numerator and having the seal face area (A2) as the denominator,
that the sliding rings (1, 2) and the rotor ring (5) consist of a material with a modulus of elasticity greater than or equal to 250,000 N/mm² and with a thermal conductivity greater than or equal to 70 W/mK,
wherein the operating gap (F) which the sliding ring (2) on the atmosphere side forms in relation to the associated housing part (3) is sealed without a centring effect by a previously fitted O-ring (25), and
wherein the O-ring (14) is in addition disposed between the housing (3) and the inside diameter of the sliding ring (2) for centring.

2. A sealing liquid seal arrangement according to claim 1, characterised in that at least the rotor ring (5) and optionally the sliding rings (1, 2) towards the rotor ring (5) have an enlarged heat-exchange surface on the outside.

3. A sealing liquid seal arrangement according to claim 2, characterised in that the free external surface of the rotor ring (5) and of the sliding rings (1, 2) are larger by about a factor of 15 than the seal face area (A2) on the sliding ring (2) on the atmosphere side.

## Revendications

1. Système d'étanchéité à liquide obturant pour assurer l'étanchéité de l'arbre d'un turbocompresseur, en particulier d'une turbocompresseur à haute pression, comprenant un anneau glissant (1) commandé par ressort et assurant l'étanchéité dans le sens axial du côté gaz, un anneau glissant (2) commandé par ressort et assurant l'étanchéité dans le sens axial du côté atmosphère, les deux anneaux étant montés de manière fixe dans le carter (3), et un anneau tournant (5) solidaire de l'arbre (4) et présentant des surfaces d'étanchéité opposées auxquelles sont associées les surfaces d'étanchéité des anneaux glissants (1, 2), aux deux anneaux glissants (1, 2) étant associé à chaque fois un volume de liquide obturant (6 et respectivement 7) lesquels volumes de liquide obturant (6, 7) communiquant entre eux à la périphérie de l'anneau tournant (5) par l'intermédiaire d'un canal annulaire (8), l'anneau glissant (2) situé du côté atmosphère assurant l'étanchéité du volume de liquide obturant (6) associé par rapport à l'atmosphère, tandis que l'anneau glissant (1) situé du côté gaz assure l'étanchéité du volume de liquide obturant (7) associé par rapport au volume de gaz, **caractérisé par le fait**
que les deux volumes de liquide obturant (6, 7) font partie d'un circuit de liquide obturant fermé (9) avec pompe (10) et refroidisseur (11), que par rapport au carter (3), l'anneau glissant (1) côté gaz est maintenu de manière mobile dans les sens axial et radial par un système d'étanchéité (12) qui entoure l'arbre (4), et l'anneau glissant (2) côté atmosphère, par des éléments secondaires sous la forme d'un anneau (13b) bloqué par des ressorts (13a) ou d'un joint torique (14) avec fente fonctionnelle (F), que la garniture étanche à anneau glissant (2) située du côté atmosphère présente un rapport de surfaces K de l'ordre de 0,45 à 0,60, K étant le quotient de la surface (A1) activée par la pression du liquide obturant (numérateur) par la surface d'étanchéité (A2) (dénominateur), que les anneaux glissants (1, 2) et l'anneau tournant (5) sont constitués d'un matériau avec un module d'élasticité égal ou supérieur à 250 000 N/mm² et présentent une conductibilité thermique égale ou supérieure à 70 W/mk, la fente fonctionnelle (F) formée par l'anneau glissant (2) situé du côté atmosphère par rapport à l'élément de carter (3) associé étant rendue étanche, sans effet de centrage, par un joint torique (25) placé en amont, et le joint torique (14) étant intercalé, pour le centrage, du côté du diamètre intérieur, entre le carter (3) et l'anneau glissant (2).

2. Système d'étanchéité à liquide obturant selon la revendication 1, caractérisé par le fait qu'au moins l'anneau tournant (5) et éventuellement aussi les anneaux glissants (1, 2) présentent extérieurement, en direction de l'anneau tournant (5), une surface d'échange de chaleur agrandie.

3. Système d'étanchéité à liquide obturant selon la revendication 2, caractérisé par le fait que les surfaces extérieures libres de l'anneau tournant (5) ainsi que des anneaux glissants (1, 2) sont plus grandes d'un facteur 15 environ que la surface d'étanchéité (A2) sur l'anneau glissant (2) situé du côté atmosphère.
